# EUROPEAN PATENT SPECIFICATION

(11) **EP 3 980 931 B1**
(45) Date of publication and mention of the grant of the patent: **20.05.2026**
(21) Application number: 20747501.3
(22) Date of filing: 04.06.2020
(51) Int. Cl.: G06V 20/52, G06V 40/16, G06V 10/762, G06V 10/77, G06V 40/50

(54) **UNSUPERVISED ENROLLMENT FOR ANTI-THEFT FACIAL RECOGNITION SYSTEM**
UNBEAUFSICHTIGTE REGISTRIERUNG FÜR ANTI-DIEBSTAHL GESICHTSERKENNUNGSSYSTEMFF
INSCRIPTION NON SUPERVISÉE POUR LE SYSTÈME DE RECONNAISSANCE FACIALE ANTIVOL

(30) Priority: 04.06.2019 US 201962857097 P
(43) Date of publication of application: 13.04.2022
(73) Proprietor: Tyco Fire & Security GmbH, 8212 Neuhausen am Rheinfall (CH)
(72) Inventor: ROZNER, Amit, Yehud (IL); FALIK, Yohay, Petah Tiqwa (IL)
(74) Representative: Wright, Howard Hugh Burnby
(86) International application number: PCT/US2020/036075
(87) International publication number: WO 2020/247596

(56) References cited:
- US-A1- 2014 254 890
- SCHROFF FLORIAN ET AL: "FaceNet: A unified embedding for face recognition and clustering", 2015 IEEE CONFERENCE ON COMPUTER VISION AND PATTERN RECOGNITION (CVPR), IEEE, 7 June 2015 (2015-06-07), pages 815 - 823, XP032793492, [retrieved on 20151014], DOI: 10.1109/CVPR.2015.7298682
- LIN CHUNG-CHING ET AL: "A Prior-Less Method for Multi-face Tracking in Unconstrained Videos", 2018 IEEE/CVF CONFERENCE ON COMPUTER VISION AND PATTERN RECOGNITION, IEEE, 18 June 2018 (2018-06-18), pages 538 - 547, XP033476014, [retrieved on 20181214], DOI: 10.1109/CVPR.2018.00063

## Description

### CROSS-REFERENCE TO RELATED APPLICATION

This application claims the benefit of U.S. Provisional Application Serial No. 62/857,097, entitled "UNSUPERVISED ENROLLMENT FOR ANTI-THEFT FACIAL RECOGNITION SYSTEM" and filed on June 4, 2019.

### BACKGROUND

The present disclosure relates generally to security systems, and more particularly, to unsupervised enrollment for an anti-theft facial recognition system.

In many retail stores, there is a need of identifying persons of interest (POI) in the context of theft incidents. Conventional facial recognition systems require multiple images and detailed supervision.

Thus, improvements in facial recognition systems are desired.

US 2014/254890 relates to predictive theft notification for the prediction of theft. Predictive theft notifications are used to coordinate appropriate responses to persons who are likely to commit acts of theft. Image data is generated and processed in a computer processing device to recognize the presence of a facial image comprising a face of a person. An analysis is performed of data representative of the facial image to determine a biometric match relative to one or more biometric models of facial images stored in a database. Based on this analysis, at least one predictive notification is generated with regard to a future potential theft of merchandise from the secured facility. The predictive notification is generated based upon a determination of the biometric match.

### SUMMARY

This summary is provided to introduce a selection of concepts in a simplified form that are further described below in the DETAILED DESCRIPTION. This summary is not intended to identify key features of the claimed subject matter, nor is it intended to be used as an aid in determining the scope of the claimed subject matter.

According to an aspect of the present invention, there is provided a security system as set out in claim 1.

According to another aspect of the present invention, there is provided a method as set out in claim 7. According to another aspect of the present invention, there is provided a computer-readable medium as set out in claim 13.

Further aspects of the present disclosure are described in more details below.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 is a block diagram of an example security system including an anti-theft facial recognition system in accordance with one or more implementations of the present disclosure;
FIG. 2 is a block diagram of an example implementation of the facial recognition model of the system of FIG. 1; and
FIG. 3 is a block diagram of examples components of a computer device that may implement one or more of the features of the security system of FIG. 1.
FIG. 4 is a schematic diagram of an example implementation of the security system of FIG. 1.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known components may be shown in block diagram form in order to avoid obscuring such concepts.

In many retail stores, there is a need of identifying persons of interest (POI) in the context of theft incidents. Current facial recognition systems which are used for repeat offender detection require a trained human in order to enroll a person into the system. Single or multiple images of the person should be selected and inserted into the system by a trained personnel. The images are then embedded into a deep feature space and stored in a face recognition database, which is used for facial recognition of POIs.

The present disclosure addresses one or more shortcomings of current systems by providing a system for unsupervised enrollment of a POI into a facial recognition system so it could detect the POI on his next visit to the store. This type of system can extract faces from video frames and decide whether to store their features in a database without any human in the loop. In an implementation, the decision is based on each frames' features extracted by a facial recognition model, such as but not limited to a deep neural network (DNN), and thus no human intervention is needed. Thus, the present disclosure can be used without a trained professional that supervises the system. Furthermore, the present disclosure can reduce costs of enrollment to such a system.

In an aspect, the disclosed solution includes multiple parts in order to automatically process the theft video. The system includes a facial recognition model, such as a face detection DNN, which locates the face in each frame with high accuracy. Single or multiple detections are then tracked by a tracker, which enables finding correspondence between video frames and creates a track for each POI. A track is a series of face images belongs to an individual. Each track is then analyzed using a feature extractor DNN, which finds unique biometric features for each person. In an implementation, the extracted deep features are clustered per track using a clustering algorithm in order to remove outliers and improve the database quality. The chosen features are then stored in a facial recognition database and used for future POI recognition.

This solution is completely unsupervised so it overcomes the need for a human in the loop in order to choose the optimal images from a video clip. This has a clear advantage over prior solutions in both cost effectiveness and speed. Cost effectiveness is easy to understand due to reduction in operational cost when an operator in no longer needed. Speed is also a notable factor, as it enables the system to search for the POI within seconds of the incident. In contrast, the traditional solutions might take hours or even days until the images would be inserted into the system, thereby leaving open the possibility of a security breach during this period. Thus, the present solution may maintain maximum security for the store.

Therefore, by removing the requirement for a human in the loop, the present solution may provide a leap in cost effectiveness and/or speed, which enables stores to use such a system easily without the need to hire additional staff for this purpose.

Turning now to the figures, example aspects are depicted with reference to one or more components described herein, where components in dashed lines may be optional.

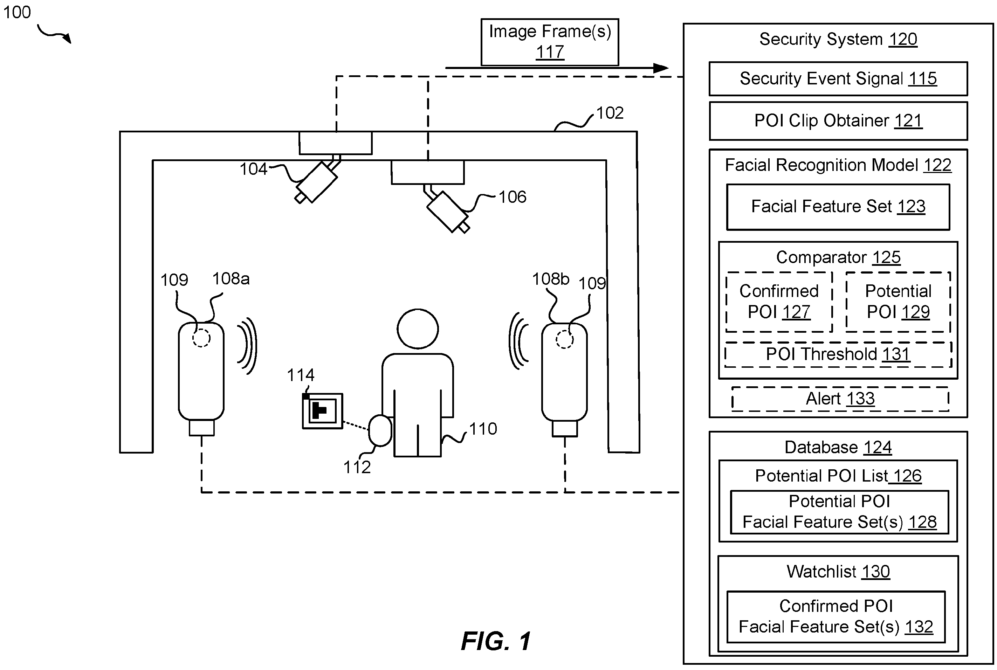

Referring to FIG. 1, an example anti-theft facial recognition system 100 includes a security system 120 deployed at an establishment (e.g., store) 102. The establishment 102 may include, for example, at least an outside-facing camera 104 facing out from an entrance of the establishment 102 and an inside-facing camera 106 facing inward from the entrance of the establishment 102. The present implementations provide mechanisms to identify and alert security personnel of individuals that may be engaged in theft of items from the establishment 102 based on the security system 120 auto-enrolling persons of interest (POIs) from prior security events.

For example, as individuals enter and exit the establishment 102, they pass through one or more pedestal scanners 108a and 108b. Goods such as item 112 that include an electronic tag 114 (e.g., a radio frequency identifier (RFID) tag, an acousto-magnetic tag, or any other type of electronic article surveillance device) may be scanned by the pedestal scanners 108a and 108b to determine whether the item 112 was paid for or not. For example, when the item 112 is paid for, the tag 114 may be removed or deactivated so that it will not be detected by the scanners 108a and 108b. During this time, both the outside-facing camera 104 and inside-facing cameras 106 may be recording activity from each end. In some cases, the outside-facing camera 104 and the inside-facing camera 106 may be mounted on the one or more pedestal scanners 108a and 108b.

In some instances, the pedestal scanners 108a and 108b may detect that the item 112 having the electronic tag 114 is located near the scanners, and hence may be unpaid for and is being carried out of the store 102 by the individual 110. As such, the pedestal scanners 108a and 108b and/or the security system 120 may generate a security event signal 115, which may activate one or more notification devices 109, such as an audio alarm device, a strobe or flashing light device, and/or a notification message sent to security or store personnel. Concurrently, as the individual 110 is just prior to exiting the establishment 102, or as they are exiting, or after they have exited, inside-facing camera 106 and/or outside-facing camera 104 may have recorded video or photographic image frames of the individual 110.

Accordingly, in response to the security event signal 115, a POI clip obtainer module 121 in the security system 120 may obtain one or more image frame(s) 117 of the individual 110. For example, the one or more image frames 117 may be captured from a timeframe that spans before and after the security event signal 115, e.g., within a certain threshold time. The POI clip obtainer module 121 may provide the one or more image frames 117 to a facial recognition model 122.

The facial recognition model 122 is configured to identify a unique facial feature set 123 for the individual 110, and then determine whether the individual 110 is a confirmed POI 127 for future surveillance or can be classified as a potential POI 129 for future surveillance. In particular, the facial recognition model 122 may include a comparator 125 configured to compare the unique facial feature set 123 for the individual 110 with one or more confirmed POI facial feature sets 132 stored in a database 124, such as in a watch list 130 of confirmed POIs. If the comparator 125 determines a match, then the comparator 125 may classify the unique facial feature set 123 of the individual 110 a confirmed POI 127 and store the information and/or update some portion of the matching confirmed POI facial feature set 132 for the individual 110, e.g., if new information has been gathered. It should be understood that a match, as used herein, may not be an exact match but may refer to a probability of matching being above a matching threshold.

If there is no match to a confirmed POI facial feature set 132 in the watch list 130, then the comparator 125 may compare the unique facial feature set 123 for the individual 110 with one or more potential POI facial feature sets 128 stored in a potential POI list 126 in the database 124. If there is a match, then the comparator 125 may determine whether a POI threshold 131 has been met in order to classify the unique facial feature set 123 of the individual 110 as a confirmed POI 127 and store the unique facial feature set 123 of the individual 110 as one of the confirmed POI facial feature sets 132. For example, the POI threshold 131 may be a threshold number of times a unique facial feature set 123 must be identified before being considered a confirmed POI 127. For instance, the POI threshold 131 may be set to 2 (or more) so that an accidental triggering of the security event signal 115 by the individual 110 does not cause the facial feature set of the individual to be placed in the watchlist 130. In other words, the POI threshold 131 may represent a minimum number of times that an individual 110 has been identified by the facial recognition model 122 in response to the one or more pedestals 108a and 108b detecting a potential theft of one or more items 112 having the tag 11. If the individual 110 has been identified by the facial recognition model 122 and is listed in the potential POI list 126 for the POI threshold 131 defined number of times, e.g., which could be tracked by a counter associated with the potential POI facial feature sets 128, then the unique facial feature set 123 of the individual 110 may be moved from the potential POI list 126 to the watchlist 130. In other words, movement to the watchlist 130 may represent an identified pattern of potential theft of items from the establishment 102 by the individual 110 corresponding to the confirmed POI facial feature set 132. Alternatively, if the comparator 125 determines that the POI threshold 131 has not been met, then the comparator may classify the unique facial feature set 123 of the individual 110 as a potential POI 129 and store the unique facial feature set 123 of the individual 110 as one of the potential POI facial feature sets 128.

Thus, based upon the above procedure, the security system 120 has learned the facial features of potential thieves, and is setup to perform future surveillance and generate an alert 133 to notify store personnel whenever the individual 110 having the confirmed POI facial feature set 132 in the watchlist 130 enters the store 102.

For example, subsequently, after the individual 110 is added to the watchlist 130, the security system 120, and more particularly, the facial recognition model 122, may identify the individual 110 using one or more image frames 117 from the outside-facing camera 104 prior to or upon the individual 110 entering the store 102. More specifically, the facial recognition model 122 may identify the unique facial feature set 123 and the comparator 125 may determine correspondence with the confirmed POI 127 (e.g., already in the watchlist 130 or based on meeting the POI threshold 131). In response to this proactive identification, and before any security event signal 115 is generated, the comparator 125 of the security system 120 may generate the alert 133. For example, the alert 133 may be a message (e.g., text message, e-mail), an audio notification (e.g., a message broadcast by a speaker, a voice mail), a visual notification (a light that is turned on), and/or a haptic notification that is transmitted to a device used by a store personnel (e.g., a point of sale terminal, a computer, a phone (wired/wireless/cellular), a device in visual or audio range of the store personnel, or any other type of device that may be able to communicate information about the presence of the confirmed POI 127 to the personnel or security members associated with the establishment 102.

In other words, the security system 120 provides a proactive approach, whereby the security system 120 may identify the individual 110 based on a learned pattern of potential theft of items 112 at the establishment 102 (or other establishments sharing watchlists 130, e.g., via wired or wireless communication over a network such as the Internet and/or a cellular network), and alert 130 store or security personnel for appropriate action. In some implementations, the potential POI list 126 and/or the watchlist 128 may include any type of electronic data extracted from the image clip, such as but not limited to image data (e.g., one or more video clips, one or more photos) of the individual 110 using both the inside-facing 106 and outside-facing camera 104. For example, the extracted electronic data may aid the store or security personnel in tracking the confirmed POI 127 and/or in identifying previous types of stolen goods.

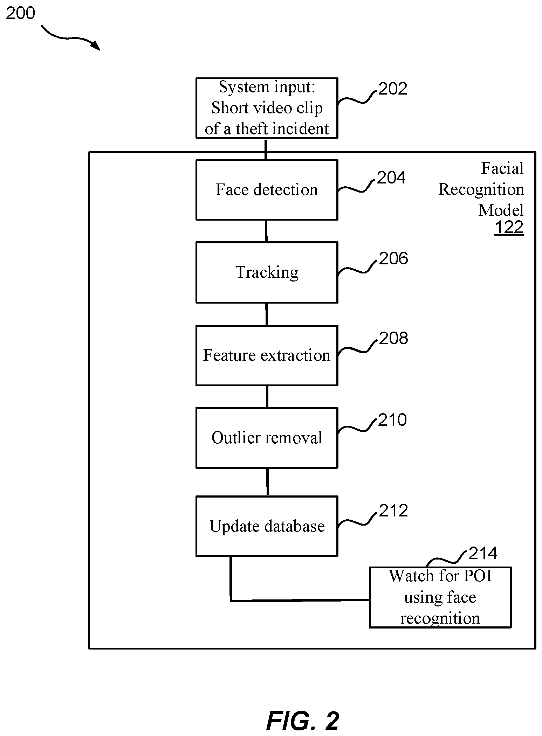

Referring to FIG. 2, in example implementation, the facial recognition model 122 may be implemented with a plurality of components for performing the functions described herein.

At block 202, for example, the facial recognition model 122 gets a video clip of a theft incident, which can be automatically generated by a store pedestal alarm equipped with 2 cameras. In some cases, the video origin may be a camera mounted on the pedestal facing the inner side of the store. When the pedestal alarm goes off, a video from a few seconds prior to the incident is sent from the video recording system to the system. It should be understood that while this example may refer to video, the system may likewise receive one or more image frames, including one or more photographs.

At block 204, for example, in an implementation, raw video frames are passed through a face detection DNN. The DNN can find single or multiple human faces with very high accuracy in a single video frame. All video frames are processed using the proposed detection network which outputs bounding box coordinates around each face. In case no face was found in the frame, it may be discarded immediately. In other cases where one or more faces were found, the output serves as an input to the next component in the system, which is a tracking algorithm (or tracker) at block 206.

At block 206, the role of the tracker is to perform inter frame correspondence between faces and thus create meaningful sequences through time that include a face of a single person. The output of the tracker is correspondence between each bounding box to a track identifier (id). If more than one bounding box is present in a frame, it is the tracker's responsibility to decide which bounding box corresponds to each track id. The decision is usually based on minimal intersection over union (IOU) criteria. In most cases, different tracks could start and/or finish on different frames, thus the tracker has a decision for each bounding box it gets. This decision is whether the current bounding box belongs to an already existing track or whether the tracker needs to open a new unique track id. Closing old tracks is also done by the tracker in the same manner (IOU criteria).

As such, at block 208 in this implementation, each track generates a series of bounding boxes, which may be received by a feature extraction component. The feature extraction component can crop the series of bounding boxes for each track from the video clip and analyze them separately. The cropped faces may then be processed using another DNN. This kind of DNN is an embedding function that converts a cropped face image into a high dimensional vector often referred to as the embedding vector. This compact representation captures the unique face features and enables the facial recognition model 122 to distinguish between people. The embedding vectors will be used as a reference database, e.g., the watchlist 130, by the facial recognition model 122 operating with the outside-facing camera 104 overlooking the store entrance. This camera would be able to recognize the POI on their return to the store and alert the store stuff.

At block 210, an outlier removal component 210 is added to increase the performance of such an unsupervised system. In traditional systems, a human would cherry pick the best captures in the images of the POI so the performance would be optimal. A scenario where random images are present in the facial recognition database could lead to poor performance and recognition of random people as POIs. Avoiding such a scenario, the facial recognition model 122 uses a clustering algorithm, which has the ability to efficiently find cluster outliers. Removing outliers by storing only the core of the cluster in the database, at block 212, enables the system to overcome the limitations of detection and tracking mistakes, generally leading to a major increase in the overall performance.

At block 214, the facial recognition model 122 implements a monitoring component to watch for POIs using the facial recognition functionality described above.

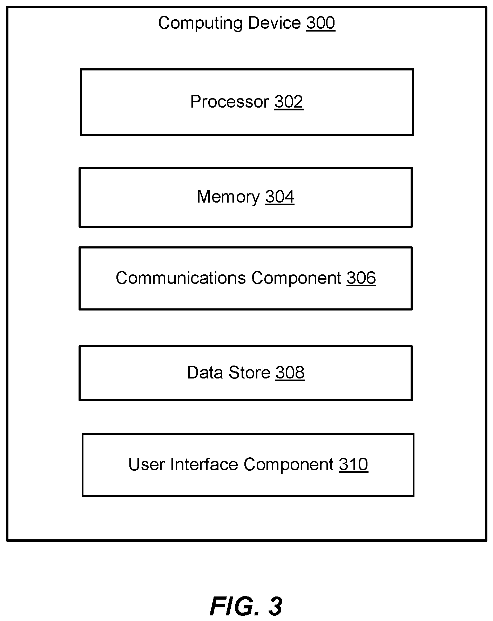

Referring to FIG. 3, a computing device 300 may implement all or a portion of the functionality described in FIGS. 1 and 2. For example, the computing device 300 may be or may include at least a portion of the security system 120, the facial recognition model 122, or any other component described herein with reference to FIGS. 1 and 2. The computing device 300 includes a processor 302 which may be configured to execute or implement software, hardware, and/or firmware modules that perform some or all of the functionality described herein with reference to FIGS. 1 and 2. For example, the processor 302 may be configured to execute or implement software, hardware, and/or firmware modules that perform some or all of the functionality described herein with reference to the security system 120, the facial recognition model 122, or any other component described herein with reference to FIGS. 1 and 2.

The processor 302 may be a micro-controller, an application-specific integrated circuit (ASIC), or a field-programmable gate array (FPGA), and/or may include a single or multiple set of processors or multi-core processors. Moreover, the processor 302 may be implemented as an integrated processing system and/or a distributed processing system. The computing device 300 may further include a memory 304, such as for storing local versions of applications being executed by the processor 302, related instructions, parameters, etc. The memory 304 may include a type of memory usable by a computer, such as random access memory (RAM), read only memory (ROM), tapes, magnetic discs, optical discs, volatile memory, non-volatile memory, and any combination thereof. Additionally, the processor 302 and the memory 304 may include and execute an operating system executing on the processor 302, one or more applications, display drivers, etc., and/or other components of the computing device 300.

Further, the computing device 300 may include a communications component 306 that provides for establishing and maintaining communications with one or more other devices, parties, entities, etc. utilizing hardware, software, and services. The communications component 306 may carry communications between components on the computing device 300, as well as between the computing device 300 and external devices, such as devices located across a communications network and/or devices serially or locally connected to the computing device 300. In an aspect, for example, the communications component 306 may include one or more buses, and may further include transmit chain components and receive chain components associated with a wireless or wired transmitter and receiver, respectively, operable for interfacing with external devices.

Additionally, the computing device 300 may include a data store 308, which can be any suitable combination of hardware and/or software, that provides for mass storage of information, databases, and programs. For example, the data store 308 may be or may include a data repository for applications and/or related parameters not currently being executed by processor 302. In addition, the data store 308 may be a data repository for an operating system, application, display driver, etc., executing on the processor 302, and/or one or more other components of the computing device 300.

The computing device 300 may also include a user interface component 310 operable to receive inputs from a user of the computing device 300 and further operable to generate outputs for presentation to the user (e.g., via a display interface to a display device). The user interface component 310 may include one or more input devices, including but not limited to a keyboard, a number pad, a mouse, a touch-sensitive display, a navigation key, a function key, a microphone, a voice recognition component, or any other mechanism capable of receiving an input from a user, or any combination thereof. Further, the user interface component 310 may include one or more output devices, including but not limited to a display interface, a speaker, a haptic feedback mechanism, a printer, any other mechanism capable of presenting an output to a user, or any combination thereof.

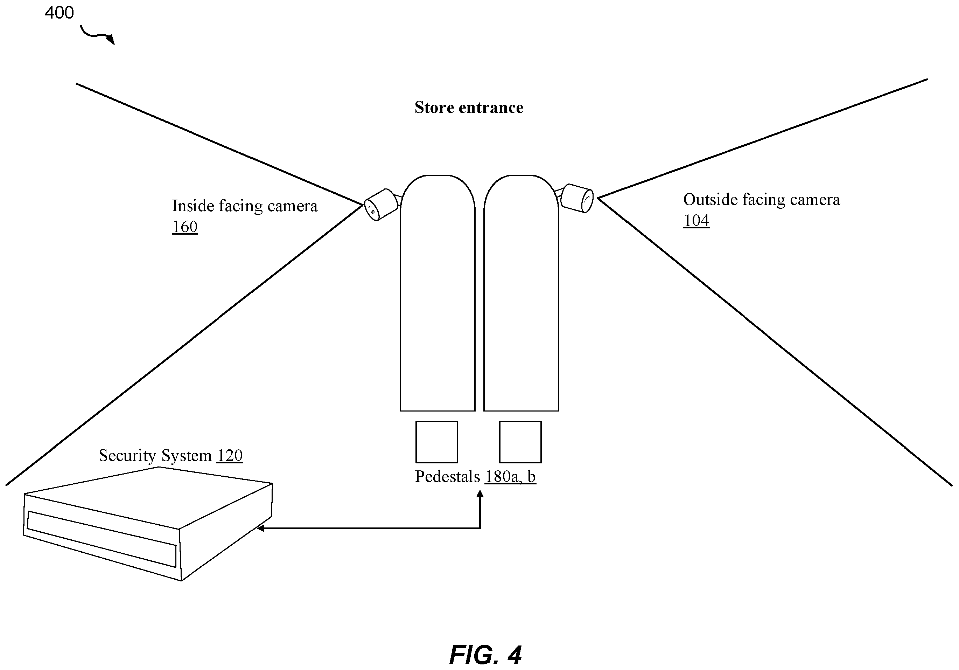

Referring to FIG. 4, an example anti-theft facial recognition system 400, which may represent an implementation of the system 100 of FIG. 1, includes a security system 120, the pedestals 108a and 108b, the outer-facing camera 104 and the inner-facing camera 106.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A security system (120, 300), comprising:
a memory (304) storing instructions; and
a processor (302) in communication with the memory and configured to:
receive a video having a plurality of frames of a security event;
detect a human face in the plurality of frames, wherein the human face corresponds to a person of interest;
generate a track of the human face of the person of interest, wherein the track includes a series of face images of the human face from respective ones of the plurality of frames;
generate a unique set of facial recognition biometric features for the human face of the person of interest including:
cropping each of the face images of the human face in the track;
extracting, using an embedding function, potential facial recognition biometric features from the cropped face images into a set of embedding vectors; and
removing, using a clustering algorithm, outlier ones of the set of embedding vectors resulting in a core of a cluster of the set of embedding vectors that define the unique set of facial recognition biometric features;
store the core of the cluster of the set of embedding vectors that define the unique set of facial recognition biometric features for the human face in association with an identification of the person of interest in a facial recognition database having a plurality of unique sets of facial recognition biometric features corresponding to a plurality of known human faces of a plurality of persons of interest;
receive a new video including a new face;
determine whether the new face detected in the new video includes a new set of facial recognition biometric features that is a match with one of the plurality of unique sets of facial recognition biometric features corresponding to the plurality of known human faces of a plurality of persons of interest; and
generate an alert of an identified person of interest in response to determining the match.

2. The security system (120, 300) of claim 1, wherein the processor (302) is further configured to determine whether the unique set of facial recognition biometric features corresponds to a person of interest threshold, and wherein to store the unique set of facial recognition biometric features, the processor is further configured to:
store the unique set of facial recognition biometric features in a confirmed person of interest watchlist based on determining that the unique set of facial recognition biometric features corresponds to the person of interest threshold; and
store the unique set of facial recognition biometric features in a potential person of interest watchlist based on determining that the unique set of facial recognition biometric features does not correspond to the person of interest threshold.

3. The security system (120, 300) of claim 2, wherein the person of interest threshold corresponds to a threshold number of times a unique facial feature set is detected to be identified as a confirmed person of interest.

4. The security system (120, 300) of claim 2, wherein one of both of the confirmed person of interest watchlist or the potential person of interest watchlist includes the plurality of known human faces of a plurality of persons of interest.

5. The security system (120, 300) of claim 1, wherein the processor (302) is further configured to receive a security event signal triggering activation of one or more notification devices (109).

6. The security system (120, 300) of claim 4, wherein to receive the video having the plurality of frames of the security event, the processor (302) is further configured to receive the video from a timeframe spanning before and after receiving the security event signal within a threshold time.

7. A method of unsupervised enrollment in an anti-theft facial recognition system, comprising:
receiving a video having a plurality of frames of a security event;
detecting a human face in the plurality of frames, wherein the human face corresponds to a person of interest;
generating a track of the human face of the person of interest, wherein the track includes a series of face images of the human face from respective ones of the plurality of frames;
generating a unique set of facial recognition biometric features for the human face of the person of interest including:
cropping each of the face images of the human face in the track;
extracting, using an embedding function, potential facial recognition biometric features from the cropped face images into a set of embedding vectors; and
removing, using a clustering algorithm, outlier ones of the set of embedding vectors resulting in a core of a cluster of the set of embedding vectors that define the unique set of facial recognition biometric features;
storing the core of the cluster of the set of embedding vectors that define the unique set of facial recognition biometric features for the human face in association with an identification of the person of interest in a facial recognition database having a plurality of unique sets of facial recognition biometric features corresponding to a plurality of known human faces of a plurality of persons of interest;
receiving a new video including a new face;
determining whether the new face detected in the new video includes a new set of facial recognition biometric features that is a match with one of the plurality of unique sets of facial recognition biometric features corresponding to the plurality of known human faces of a plurality of persons of interest; and
generating an alert of an identified person of interest in response to determining the match.

8. The method of claim 7, further comprising determining whether the unique set of facial recognition biometric features corresponds to a person of interest threshold, and wherein storing the unique set of facial recognition biometric features includes:
storing the unique set of facial recognition biometric features in a confirmed person of interest watchlist based on determining that the unique set of facial recognition biometric features corresponds to the person of interest threshold; and
storing the unique set of facial recognition biometric features in a potential person of interest watchlist based on determining that the unique set of facial recognition biometric features does not correspond to the person of interest threshold.

9. The method of claim 8, wherein the person of interest threshold corresponds to a threshold number of times a unique facial feature set is detected to be identified as a confirmed person of interest.

10. The method of claim 8, wherein one of both of the confirmed person of interest watchlist or the potential person of interest watchlist includes the plurality of known human faces of a plurality of persons of interest.

11. The method of claim 7, further comprising receiving a security event signal triggering activation of one or more notification devices.

12. The method of claim 11, wherein receiving the video having the plurality of frames of the security event includes receiving the video from a timeframe spanning before and after receiving the security event signal within a threshold time.

13. A computer-readable medium storing instructions executable by a processor to perform the method of any of claims 7 to 12.

## Patentansprüche

1. Sicherheitssystem (120, 300), umfassend:
einen Speicher (304), der Befehle speichert, und
einen Prozessor (302) in Kommunikation mit dem Speicher und der zu Folgendem konfiguriert ist:
Empfangen eines Videos, das eine Vielzahl von Einzelbildern eines Sicherheitsereignisses aufweist;
Erfassen eines menschlichen Gesichts in der Vielzahl von Bildern, wobei das menschliche Gesicht dem einer Person von Interesse entspricht;
Erzeugen einer Spur des menschlichen Gesichts von der Person von Interesse, wobei die Spur eine Reihe von Gesichtsbildern dieses menschlichen Gesichts aus den jeweiligen Bildern der Vielzahl von Bildern umfasst;
Erzeugen einer einzigartigen Reihe von biometrischen Gesichtserkennungsmerkmalen für das menschliche Gesicht der Person von Interesse, einschließlich:
Zuschneiden jedes der Gesichtsbilder des menschlichen Gesichts in der Spur;
Extrahieren potenzieller biometrischer Gesichtserkennungsmerkmale aus den zugeschnittenen Gesichtsbildern unter Verwendung einer Einbettungsfunktion in einen Satz von Einbettungsvektoren;
Entfernen von Ausreißern aus dem Satz von Einbettungsvektoren mithilfe eines Clustering-Algorithmus, was zu einem Kern eines Clusters aus dem Satz von Einbettungsvektoren führt, der den einzigartigen Satz von biometrischen Gesichtserkennungsmerkmalen definiert;
Speichern dieses Kerns des Clusters des Satzes von Einbettungsvektoren, die den einzigartigen Satz von biometrischen Gesichtserkennungsmerkmalen für das menschliche Gesicht in Verbindung mit einer Identifizierung der Person von Interesse in einer Gesichtserkennungsdatenbank definieren, welche eine Vielzahl einzigartiger Sätze von biometrischen Gesichtserkennungsmerkmalen aufweist, die einer Vielzahl bekannter menschlicher Gesichter einer Vielzahl Personen von Interesse entsprechen;
Empfangen eines neuen Videos, welches ein neues Gesicht einschließt;
Bestimmen, ob das neue Gesicht, das im neuen Video erfasst wird, einen neuen Satz von biometrischen Gesichtserkennungsmerkmalen einschließt, der mit einem der Vielzahl von einzigartigen Sätzen von biometrischen Gesichtserkennungsmerkmalen übereinstimmt, welche der Vielzahl bekannter menschlicher Gesichter einer Vielzahl der Personen von Interesse entsprechen; und
Erzeugen eines Alarms für die Erkennung der identifizierten Person von Interesse als Reaktion auf die Feststellung der Übereinstimmung.

2. Sicherheitssystem (120, 300) nach Anspruch 1, wobei der Prozessor (302) weiter so konfiguriert ist, dass er bestimmt, ob der einzigartige Satz biometrischer Gesichtserkennungsmerkmale einer Person von Interesse entspricht, und wobei der Prozessor zum Speichern des einzigartigen Satzes biometrischer Gesichtserkennungsmerkmale weiter zu Folgendem konfiguriert ist:
Speichern des einzigartigen Satzes biometrischer Gesichtserkennungsmerkmale in einer bestätigten Beobachtungsliste für Personen von Interesse auf der Grundlage der Feststellung, dass der einzigartige Satz biometrischer Gesichtserkennungsmerkmale dem Schwellenwert für Personen von Interesse entspricht; und
Speichern des einzigartigen Satzes biometrischer Gesichtserkennungsmerkmale in einer Beobachtungsliste potenzieller Personen von Interesse auf der Grundlage der Feststellung, dass der einzigartige Satz biometrischer Gesichtserkennungsmerkmale nicht dem Schwellenwert der Personen von Interesse entspricht.

3. Sicherheitssystem (120, 300) nach Anspruch 2, wobei der Schwellenwert für Personen von Interesse einer Schwellenanzahl von Erfassungen eines einzigartigen Satzes von Gesichtsmerkmalen entspricht, die erforderlich sind, um als bestätigte Person von Interesse identifiziert zu werden.

4. Sicherheitssystem (120, 300) nach Anspruch 2, wobei entweder die Beobachtungsliste für bestätigte Personen von Interesse oder die Beobachtungsliste für potenzielle Personen von Interesse die Vielzahl bekannter menschlicher Gesichter von einer Vielzahl von Personen von Interesse einschließt.

5. Sicherheitssystem (120, 300) nach Anspruch 1, wobei der Prozessor (302) weiter so konfiguriert ist, dass er ein Sicherheitsereignissignal empfängt, das die Aktivierung eines oder mehrerer Benachrichtigungsvorrichtungen (109) auslöst.

6. Sicherheitssystem (120, 300) nach Anspruch 4, wobei der Prozessor (302) zum Empfangen des Videos mit der Vielzahl von Bildern des Sicherheitsereignisses weiter so konfiguriert ist, dass er das Video in einem Zeitrahmen empfängt, der sich vor und nach dem Empfang des Signals für das Sicherheitsereignis innerhalb einer Schwellenzeit erstreckt.

7. Verfahren zur unbeaufsichtigten Registrierung in einem Anti-Diebstahl-Gesichtserkennungssystem, umfassend:
Empfangen eines Videos mit einer Vielzahl von Bildern eines Sicherheitsereignisses;
Erfassen eines menschlichen Gesichts in der Vielzahl von Bildern, wobei das menschliche Gesicht einer Person von Interesse entspricht;
Erzeugen einer Spur des Gesichts der Person von Interesse, wobei die Spur eine Reihe von Gesichtsbildern des menschlichen Gesichts aus den jeweiligen Bildern der Vielzahl von Bildern umfasst;
Erzeugen einer einzigartigen Reihe von biometrischen Gesichtserkennungsmerkmalen für das Gesicht der Person von Interesse, einschließlich:
Zuschneiden jedes der Gesichtsbilder des menschlichen Gesichts in der Spur;
Extrahieren potenzieller biometrischer Gesichtserkennungsmerkmale aus den beschnittenen Gesichtsbildern unter Verwendung einer Einbettungsfunktion in einen Satz von Einbettungsvektoren; und
Entfernen von Ausreißern aus dem Satz von Einbettungsvektoren mithilfe eines Clustering-Algorithmus, was zu einem Kern eines Clusters aus dem Satz von Einbettungsvektoren führt, der den einzigartigen Satz von biometrischen Gesichtserkennungsmerkmalen definiert;
Speichern dieses Kerns des Clusters des Satzes von Einbettungsvektoren, die den einzigartigen Satz von biometrischen Gesichtserkennungsmerkmalen für das menschliche Gesicht in Verbindung mit einer Identifizierung der Person von Interesse in einer Gesichtserkennungsdatenbank definieren, welche eine Vielzahl einzigartiger Sätze von biometrischen Gesichtserkennungsmerkmalen aufweist, die einer Vielzahl bekannter menschlicher Gesichter einer Vielzahl Personen von Interesse entsprechen;
Empfangen eines neuen Videos, welches ein neues Gesicht einschließt;
Bestimmen, ob das neue Gesicht, das im neuen Video erfasst wird, einen neuen Satz von biometrischen Gesichtserkennungsmerkmalen einschließt, der mit einem der Vielzahl von einzigartigen Sätzen von biometrischen Gesichtserkennungsmerkmalen übereinstimmt, welche der Vielzahl bekannter menschlicher Gesichter einer Vielzahl der Personen von Interesse entsprechen; und
Erzeugen eines Alarms für die Erkennung der identifizierten Person von Interesse als Reaktion auf die Feststellung der Übereinstimmung.

8. Verfahren nach Anspruch 7, weiter umfassend das Bestimmen, ob der einzigartige Satz biometrischer Gesichtserkennungsmerkmale einer Person von Interesse entspricht, und wobei das Speichern des einzigartigen Satzes biometrischer Gesichtserkennungsmerkmale Folgendes einschließt:
Speichern des einzigartigen Satzes biometrischer Gesichtserkennungsmerkmale in einer bestätigten Beobachtungsliste für Personen von Interesse auf der Grundlage der Feststellung, dass der einzigartige Satz biometrischer Gesichtserkennungsmerkmale dem Schwellenwert für Personen von Interesse entspricht; und
Speichern des einzigartigen Satzes biometrischer Gesichtserkennungsmerkmale in einer Beobachtungsliste potenzieller Personen von Interesse auf der Grundlage der Feststellung, dass der einzigartige Satz biometrischer Gesichtserkennungsmerkmale nicht dem Schwellenwert der Person von Interesse entspricht.

9. Verfahren nach Anspruch 8, wobei der Schwellenwert für Personen von Interesse einer Schwellenanzahl von Erfassungen eines einzigartigen Satzes von Gesichtsmerkmalen entspricht, die erforderlich sind, um als bestätigte Person von Interesse identifiziert zu werden.

10. Verfahren nach Anspruch 8, wobei entweder die Beobachtungsliste für bestätigte Personen von Interesse oder die Beobachtungsliste für potenzielle Personen von Interesse die Vielzahl bekannter menschlicher Gesichter von einer Vielzahl von Personen von Interesse einschließt.

11. Verfahren nach Anspruch 7, weiter umfassend das Empfangen eines Sicherheitsereignissignals, das die Aktivierung einer oder mehrerer Benachrichtigungsvorrichtungen auslöst.

12. Verfahren nach Anspruch 11, wobei das Empfangen des Videos mit der Vielzahl von Bildern des Sicherheitsereignisses das Empfangen des Videos aus einem Zeitrahmen umfasst, der sich vor und nach dem Empfang des Sicherheitsereignissignals innerhalb einer Schwellenzeit erstreckt.

13. Computerlesbares Medium, das Anweisungen speichert, die von einem Prozessor ausgeführt werden können, um das Verfahren nach einem der Ansprüche 7 bis 12 durchzuführen.

## Revendications

1. Système de sécurité (120, 300), comprenant :
une mémoire (304) stockant des instructions ; et
un processeur (302) en communication avec la mémoire et configuré pour :
recevoir une vidéo présentant une pluralité de trames d'un événement de sécurité ;
détecter un visage humain dans la pluralité de trames, dans lequel le visage humain correspond à une personne d'intérêt ;
générer une piste du visage humain de la personne d'intérêt, dans lequel la piste inclut une série d'images de visage du visage humain à partir de trames respectives de la pluralité de trames ;
générer un ensemble unique de caractéristiques biométriques de reconnaissance faciale pour le visage humain de la personne d'intérêt, incluant :
le recadrage de chacune des images de visage du visage humain dans la piste ; l'extraction, en utilisant une fonction d'intégration, de caractéristiques biométriques de reconnaissance faciale potentielles à partir des images de visage recadrées pour former un ensemble de vecteurs d'intégration ; et
la suppression, en utilisant un algorithme de regroupement, de valeurs aberrantes de l'ensemble de vecteurs d'intégration, fournissant un noyau d'un groupe de l'ensemble de vecteurs d'intégration qui définissent l'ensemble unique de caractéristiques biométriques de reconnaissance faciale ;
stocker le noyau du groupe de l'ensemble de vecteurs d'intégration qui définissent l'ensemble unique de caractéristiques biométriques de reconnaissance faciale pour le visage humain en association avec une identification de la personne d'intérêt dans une base de données de reconnaissance faciale présentant une pluralité d'ensembles uniques de caractéristiques biométriques de reconnaissance faciale correspondant à une pluralité de visages humains connus d'une pluralité de personnes d'intérêt ;
recevoir une nouvelle vidéo incluant un nouveau visage ;
déterminer si le nouveau visage détecté dans la nouvelle vidéo inclut un nouvel ensemble de caractéristiques biométriques de reconnaissance faciale qui correspond à l'un de la pluralité d'ensembles uniques de caractéristiques biométriques de reconnaissance faciale correspondant à la pluralité de visages humains connus d'une pluralité de personnes d'intérêt ; et
générer une alerte d'une personne d'intérêt identifiée en réponse à la détermination de la correspondance.

2. Système de sécurité (120, 300) selon la revendication 1, dans lequel le processeur (302) est en outre configuré pour déterminer si l'ensemble unique de caractéristiques biométriques de reconnaissance faciale correspond à un seuil de personne d'intérêt, et dans lequel, pour stocker l'ensemble unique de caractéristiques biométriques de reconnaissance faciale, le processeur est en outre configuré pour :
stocker l'ensemble unique de caractéristiques biométriques de reconnaissance faciale dans une liste de surveillance de personnes d'intérêt confirmées sur la base de la détermination du fait que l'ensemble unique de caractéristiques biométriques de reconnaissance faciale correspond au seuil de personne d'intérêt ; et
stocker l'ensemble unique de caractéristiques biométriques de reconnaissance faciale dans une liste de surveillance de personnes d'intérêt potentielles sur la base de la détermination du fait que l'ensemble unique de caractéristiques biométriques de reconnaissance faciale ne correspond pas au seuil de personne d'intérêt.

3. Système de sécurité (120, 300) selon la revendication 2, dans lequel le seuil de personne d'intérêt correspond à un seuil de nombre de fois où un ensemble unique de caractéristiques faciales est détecté comme étant identifié comme une personne d'intérêt confirmée.

4. Système de sécurité (120, 300) selon la revendication 2, dans lequel l'une ou les deux parmi la liste de surveillance de personnes d'intérêt confirmées ou la liste de surveillance de personnes d'intérêt potentielles inclut la pluralité de visages humains connus d'une pluralité de personnes d'intérêt.

5. Système de sécurité (120, 300) selon la revendication 1, dans lequel le processeur (302) est en outre configuré pour recevoir un signal d'événement de sécurité déclenchant l'activation d'un ou de plusieurs dispositifs de notification (109).

6. Système de sécurité (120, 300) selon la revendication 4, dans lequel, pour recevoir la vidéo présentant la pluralité de trames de l'événement de sécurité, le processeur (302) est en outre configuré pour recevoir la vidéo à partir d'une période s'étendant avant et après la réception du signal d'événement de sécurité dans un délai seuil.

7. Procédé d'inscription non supervisée dans un système de reconnaissance faciale antivol, comprenant :
la réception d'une vidéo présentant une pluralité de trames d'un événement de sécurité ;
la détection d'un visage humain dans la pluralité de trames, dans lequel le visage humain correspond à une personne d'intérêt ;
la génération d'une piste du visage humain de la personne d'intérêt, dans lequel la piste inclut une série d'images de visage du visage humain à partir de trames respectives de la pluralité de trames ;
la génération d'un ensemble unique de caractéristiques biométriques de reconnaissance faciale pour le visage humain de la personne d'intérêt, incluant :
le recadrage de chacune des images de visage du visage humain dans la piste ;
l'extraction, en utilisant une fonction d'intégration, de caractéristiques biométriques de reconnaissance faciale potentielles à partir des images de visage recadrées pour former un ensemble de vecteurs d'intégration ; et
la suppression, en utilisant un algorithme de regroupement, de valeurs aberrantes de l'ensemble de vecteurs d'intégration, fournissant un noyau d'un groupe de l'ensemble de vecteurs d'intégration qui définissent l'ensemble unique de caractéristiques biométriques de reconnaissance faciale ;
le stockage du noyau du groupe de l'ensemble de vecteurs d'intégration qui définissent l'ensemble unique de caractéristiques biométriques de reconnaissance faciale pour le visage humain en association avec une identification de la personne d'intérêt dans une base de données de reconnaissance faciale présentant une pluralité d'ensembles uniques de caractéristiques biométriques de reconnaissance faciale correspondant à une pluralité de visages humains connus d'une pluralité de personnes d'intérêt ;
la réception d'une nouvelle vidéo incluant un nouveau visage ;
le fait de déterminer si le nouveau visage détecté dans la nouvelle vidéo inclut un nouvel ensemble de caractéristiques biométriques de reconnaissance faciale qui correspond à l'un de la pluralité d'ensembles uniques de caractéristiques biométriques de reconnaissance faciale correspondant à la pluralité de visages humains connus d'une pluralité de personnes d'intérêt ; et
la génération d'une alerte d'une personne d'intérêt identifiée en réponse à la détermination de la correspondance.

8. Procédé selon la revendication 7, comprenant en outre le fait de déterminer si l'ensemble unique de caractéristiques biométriques de reconnaissance faciale correspond à un seuil de personne d'intérêt, et dans lequel le stockage de l'ensemble unique de caractéristiques biométriques de reconnaissance faciale inclut :
le stockage de l'ensemble unique de caractéristiques biométriques de reconnaissance faciale dans une liste de surveillance de personnes d'intérêt confirmées sur la base de la détermination du fait que l'ensemble unique de caractéristiques biométriques de reconnaissance faciale correspond au seuil de personne d'intérêt ; et
le stockage de l'ensemble unique de caractéristiques biométriques de reconnaissance faciale dans une liste de surveillance de personnes d'intérêt potentielles sur la base de la détermination du fait que l'ensemble unique de caractéristiques biométriques de reconnaissance faciale ne correspond pas au seuil de personne d'intérêt.

9. Procédé selon la revendication 8, dans lequel le seuil de personne d'intérêt correspond à un seuil de nombre de fois où un ensemble unique de caractéristiques faciales est détecté comme étant identifié comme une personne d'intérêt confirmée.

10. Procédé selon la revendication 8, dans lequel l'une ou les deux parmi la liste de surveillance de personnes d'intérêt confirmées ou la liste de surveillance de personnes d'intérêt potentielles inclut la pluralité de visages humains connus d'une pluralité de personnes d'intérêt.

11. Procédé selon la revendication 7, comprenant en outre la réception d'un signal d'événement de sécurité déclenchant l'activation d'un ou de plusieurs dispositifs de notification.

12. Procédé selon la revendication 11, dans lequel la réception de la vidéo présentant la pluralité de trames de l'événement de sécurité inclut la réception de la vidéo à partir d'une période s'étendant avant et après la réception du signal d'événement de sécurité dans un délai seuil.

13. Support lisible par ordinateur stockant des instructions exécutables par un processeur pour réaliser le procédé selon l'une quelconque des revendications 7 à 12.
